(19) Europäisches Patentamt
European Patent Office
Office européen des brevets

(11) **EP 4 737 069 A1**

(12) **EUROPEAN PATENT APPLICATION**

(43) Date of publication:
06.05.2026 Bulletin 2026/19

(21) Application number: 24210617.7

(22) Date of filing: 04.11.2024

(51) International Patent Classification (IPC):
*B25J 9/16* (2006.01)   *G05B 19/423* (2006.01)

(52) Cooperative Patent Classification (CPC):
G05B 19/423; B25J 9/163; B25J 9/1664

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Robert Bosch GmbH
70442 Stuttgart (DE)

(72) Inventors:
• Rozo, Leonel
  71032 Boeblingen (DE)
• Beik-Mohammadi, Hadi
  70190 Stuttgart (DE)
• Li, Jialin
  Illinois, 61801 (US)

Remarks:
Amended claims in accordance with Rule 137(2)
EPC.

(54) **DEVICE AND METHOD FOR LEARNING ROBOT DEVICE DYNAMICS**

(57) According to various embodiments, a method for learning robot device dynamics is described, comprising providing demonstrations for movements of a robot device, wherein each demonstration demonstrates dynamics of the robot device by indicating a sequence of demonstrated states of the robot device in an ambient space, for each demonstration, encoding the demonstrated states of the sequence of demonstrated states of the demonstration to encoded demonstrated states in a latent space by an encoding function which maps states from the ambient space to the latent space, determining latent space velocities at the encoded demonstrated states according to predetermined dynamics in the latent space, determining predicted velocities at the demonstrated states in ambient space from the determined latent space velocities at the encoded demonstrated states according to the Jacobian of an inverse of the encoding function and determining a loss for the demonstration including a prediction loss determined from a difference of the predicted velocities at the demonstrated states and the demonstrated velocities and training the encoding function to reduce a total loss including the losses determined for at least some of the demonstrations.

200

201

202

203

204

205

206

**Fig. 2**

EP 4 737 069 A1

**Description**

The present disclosure relates to devices and methods for learning robot device dynamics (for robot device control).

To ensure the safety of fully autonomous robots, stability guarantees are crucial in preventing undesirable and potentially harmful actions. Learning dynamic skills from demonstrations provides an efficient method to model highly dynamic motions from a few examples. However, stability guarantees are hard to provide in dynamical systems that are learned from demonstrations, especially when the learned dynamics are governed by neural networks. Therefore, effective approaches for learning dynamics in a way that stability is ensured are desirable. Moreover, it is desirable to be able to efficiently learn dynamics for different tasks and skills such that the robot is able to autonomously handle different control scenarios.

The publication C. Durkan et al. "Neural spline flows", in Advances in neural information processing systems, 32, 2019, referred to as reference [1] in the following, describes monotonic rational-quadratic splines, which enhance the flexibility of both coupling and autoregressive transforms while retaining analytic invertibility.

According to various embodiments, a method for learning robot device dynamics is provided, comprising providing demonstrations for movements of a robot device, wherein each demonstration demonstrates dynamics of the robot device by indicating a sequence of demonstrated states of the robot device in an ambient space, for each demonstration,

- encoding the demonstrated states of the sequence of demonstrated states of the demonstration to encoded demonstrated states in a latent space by an encoding function which maps states from the ambient space to the latent space,
- determining latent space velocities at the encoded demonstrated states according to predetermined dynamics in the latent space,
- determining predicted velocities at the demonstrated states in ambient space from the determined latent space velocities at the encoded demonstrated states according to the Jacobian of an inverse of the encoding function and
- determining a loss for the demonstration including a prediction loss determined from a difference of the predicted velocities at the demonstrated states and the demonstrated velocities

and training the encoding function to reduce a total loss including the losses determined for at least some of the demonstrations.

In other words, rather than training the dynamics in latent space, predetermined latent space dynamics are used and what is trained is the encoding function (and thus, equivalently, the decoding function, i.e. the inverse of the encoding function), i.e. the mapping between the ambient space and the latent space. In the end, dynamics are learned in this manner because for controlling the robot device states of the robot device may be mapped to the latent space using the trained encoding function, velocities in latent space may be determined and using an the Jacobian of an inverse of the encoding function (like in training) velocities in ambient space for controlling the robot device may be determined).

The method described above allows effectively learning complex contractive dynamics, making it well-suited for various robotic applications.

In particular, according to various embodiments, a learning approach denoted as Injective Contractive Flow (ICF) with contraction guarantees is provided. It provides explicit control over the contraction rate and contraction ratio, allowing for precise adjustments to the stability and contractive properties of the learned dynamics, via a simple canonical latent dynamics, which is then transformed via a diffeomorphic mapping (e.g., a normalizing flow) so that the resulting dynamics matches the desired observed velocities. This ensures that complex non-linear contractive dynamical systems can be learned and reproduced. Moreover, the learning approach according to various embodiments incorporates injective functions that map the canonical dynamics to high-dimensional systems. This allows the learning of high-dimensional contractive dynamical systems within a low-dimensional latent space. Additionally, this method is capable of learning dynamics on the Lie group $\mathcal{SO}$ (3), which can be used to model orientation dynamics. This extends the applicability of the learning method to scenarios involving rotational movements such as robot's end-effector motion.

In the following, various examples are given.

Example 1 is a method for method for learning robot device dynamics as described above.

Example 2 is the method of example 1, wherein the predetermined dynamics in the latent space are contractive.

Thus, stability of control when using the learned robot device dynamics is ensured.

Example 3 is the method of example 2, wherein the predetermined dynamics in the latent space are given by a matrix with predetermined eigenvalues.

This allows easily setting the contraction behaviour. The learned dynamics can be achieved to be contractive by setting all eigenvalues to negative values.

Example 4 is the method of example 3, comprising determining the eigenvalues according to a predetermined contraction rate and/or a predetermined contraction ratio.

Accordingly, a contraction behaviour can be achieved as desired. The contraction rate may be set by setting the absolute value of the largest eigenvalue (parameter c in the examples below) and the contraction ratio may be set by setting how much the largest eigenvalue is larger than the other ones (factor r in the examples below).

Example 5 is the method of example 3 or 4, wherein the total loss further includes an alignment loss term which rewards that the demonstrated trajectories (after being encoded to trajectories of encoded states, i.e. to encoded trajectories) match the direction of the eigenvector of the largest eigenvalue of the predetermined dynamics in latent space (i.e. the loss encourages the ambient eigen-axis (i.e. the decoder image of the latent space axis given by the direction of the eigenvector of the largest eigenvalue) to align with the demonstrated trajectories).

This achieves that the learned dynamics can quickly recover from disturbances and match the demonstrated dynamics.

Example 6 is the method of any one of examples 1 to 5, wherein the total loss further comprises a manifold matching loss term which rewards that the set of points which the inverse of the encoding function generates from the encoded demonstrated states matches the set of demonstrated states in ambient space.

This loss term is relevant in case that ambient space dimension is higher than the latent space dimension and therefore the decoding function (i.e. the inverse of the encoding function) includes a padding and the decoding function includes a depadding.

Example 7 is the method of any one of examples 1 to 6, comprising constructing the encoding function from a sequence of (concatenated) diffeomorphisms wherein training the encoding function comprises adjusting parameters of the diffeomorphisms.

A sequence of diffeomorphisms (which are concatenated (i.e. carried out one after the other) to form a (typically more complex) diffeomorphism) such as a normalizing flow and rational-quadratic layers provides high flexibility for the encoding function and can be realized in computationally efficient manner. It should be noted that constructing the encoding function from a sequence of (concatenated) diffeomorphisms is equivalent to constructing the decoding function from a sequence of (concatenated) diffeomorphisms since the sequence may simply be inverted by inverting each diffeomorphism. Accordingly, training the encoding function is equivalent to training the decoding function since the parameters that are adjusted apply to both.

Example 8 is a method for controlling a robot device, comprising learning robot device dynamics according to any one of examples 1 to 7 and following the determined robot device dynamics for controlling the robot device.

Example 9 is a robot device controller, configured to perform a method of any one of examples 1 to 8.

Example 10 is a computer program comprising instructions which, when executed by a computer, makes the computer perform a method according to any one of examples 1 to 8.

Example 11 is a computer-readable medium comprising instructions which, when executed by a computer, makes the computer perform a method according to any one of examples 1 to 9.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robot.

Figure 2 shows a flow diagram illustrating a method learning robot device dynamics according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

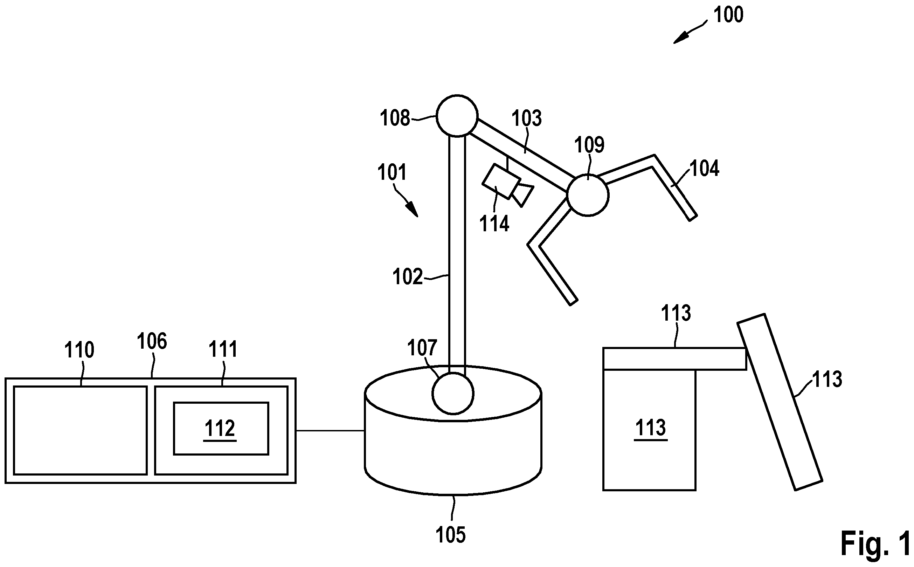

Figure 1 shows a robot 100.

The robot 100 includes a robot arm 101, for example an industrial robot arm for handling or assembling a work piece (or one or more other objects 113). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and includes a grasping tool (which may also be a suction gripper).

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm.

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data based on which the processor 110 controls the robot arm 101. According to various embodiments, the controller 106 controls the robot arm 101 on the basis of a machine-learning model (e.g. including one or more neural networks) 112 stored in the memory 111.

One option to control the robot arm 101 is that the controller 106 learns, by means of the machine-learning model 112, dynamics of the robot arm from demonstrations (typically from a human user) how to perform a certain task (like reaching for an object). This means that it is demonstrated to the controller 106 (e.g. by moving the robot arm manually by a human user) in what direction and with which speed the robot arm should move when being in a certain state (e.g. in particular end-effector position). When the controller 106 has learned these dynamics (e.g. the machine-learning model 112 is trained to output, for a state, a velocity vector), the controller 106 can simply operate as velocity controller and follow the dynamics to perform the task.

Learning robot dynamics from demonstrations has shown to be an efficient and intuitive approach for encoding highly dynamic motions into a robot's repertoire. Unfortunately, these learning-based approaches often struggle to ensure stability as they rely on the respective machine learning model to extrapolate in a controlled manner. Models based on neural networks, in particular, generally struggle with providing global stability guarantees.

Stability is commonly ensured through asymptotic or contraction guarantees. Asymptotic stability ensures that all motions converge to a fixed point (known as the system's attractor). This is suitable when the only requirement is that the robot eventually reaches a certain configuration, e.g. its end-effector is at a specific goal position. Many tasks, however, require the robot to dynamically follow desired trajectories, e.g. in flexible manufacturing, human-robot interaction, or in entertainment settings. In these cases, asymptotic stability is insufficient. A stronger notion of stability is provided by contraction theory, which ensures that all the path integrals regardless of their initial state incrementally converge over time. However, the mathematical requirements of a contractive system are difficult to ensure in popular neural network architectures.

Neural contractive dynamical systems (NCDS) provide an approach for incorporating contraction constraints directly into the architecture of neural networks. Although the NCDS approach has the ability to generate contractive vector fields for executing complex skills, it lacks the capability to provide predetermined contraction properties such as contraction rate and contraction ratio for the system.

In view of the above, according to various embodiments, a dynamics learning method, referred to in one embodiment as Injective Contractive Flows (ICF) is provided, with which contraction can be guaranteed in learned dynamics. It provides explicit control over the contraction rate via a simple canonical latent dynamics, which is then transformed via a diffeomorphic mapping (e.g. a normalizing flow) so that the resulting dynamics matches the desired observed velocities. Beyond the contraction rate, the contraction ratio also plays an important role in the contraction behaviour of a learned vector field (which reflects the learned dynamics). According to various embodiments, a mechanism to design this property is provided. Moreover, as the name indicates, the ICF incorporates injective functions that map the canonical (latent) dynamics to high-dimensional systems (operating in an ambient space). This allows the learning of high-dimensional contractive dynamical systems within a low-dimensional latent space. Additionally, this method is capable of learning dynamics on the Lie group $\mathcal{SO}(3)$, which can be used to model orientation dynamics.

In other words, a machine-learning model (e.g. machine-learning model 112) is trained which represents an encoding function (encoder) and/or a decoding function (decoder, i.e. the inverse of the encoding function).

For the following let $\dot{x} = f(x)$ be a dynamical system (e.g. describing the desired autonomous behaviour of a robot arm), where $x \in \mathbb{R}^D$ is the state variable and $f : \mathbb{R}^D \to \mathbb{R}^D$ is an, at least, $C^1$ function. A contractive

dynamical system means that all solution trajectories of the nonlinear dynamical system exponentially converge to each other regardless of initial conditions $x(0)$, $\dot{x}(0)$. This implies that the state of the dynamical system is able to recover quickly from external perturbations when following a reference trajectory. As distance metric for contractivity, the identity metric (Euclidean distance) is commonly used but there are more general contraction metrics in the Euclidean space. Furthermore, when the dynamical system evolves on a Riemannian manifold, the distance metric can be defined by geodesics. According to one embodiment, the dynamics learning method, in particular the ICF, uses flows, i.e. is a flow-based method. Flow-based methods are originally proposed to enable exact marginal likelihood for generative modelling.

Suppose training data lies in an ambient space $\mathcal{X}$, while a prior distribution is defined in a latent space $\mathcal{Z}$ with lower or equal dimension. When $\dim(\mathcal{X}) = \dim(\mathcal{Z})$, the marginal likelihood (of the training data) can be evaluated exactly as long as the map from the latent space to the ambient space is diffeomorphic, giving rise to normalizing flows. According to the widely accepted Manifold Hypothesis, training data are often embedded onto a lower-dimensional manifold, that is, $\dim(\mathcal{X}) > \dim(\mathcal{Z})$. Normalizing flows can be extended to embedding flows to tackle this case. They use operations like zero-padding on the latent variables to increase the dimension while guaranteeing the decoder (i.e. the mapping from latent space to ambient space) is injective, or in other words, diffeomorphic on the decoder image, which also admits exact marginal likelihood. Beyond applications in generative models, the diffeomorphic nature of normalizing flows and embedding flows enables them to preserve contraction properties from a canonical latent dynamics to the ambient space. According to various embodiments, this is used for dynamics learning with contraction.

Specifically, according to one embodiment, a diffeomorphism is used which is referred to as contractive flow (CF). The goal of i.e. (robot device controller) training is the learning of the dynamics is learning contractive dynamics from a training dataset composed of N pairs of state (i.e. in particular position and/or orientation) and velocity $\left\{ \hat{\mathbf{x}}_i, \hat{\mathbf{v}}_i \right\}_{i=1}^{N}$ given by demonstrations.

A contractive flow (CF) is a diffeomorphism $\psi$ applied to a simple contractive dynamical system $\dot{z} = g(z)$ in a latent space to construct complex contractive dynamics $f_\psi$ in the ambient space. The ambient dynamics $f_\psi$ is given by

$$f_\psi(\mathbf{x}) = \mathbf{J}_\psi(\mathbf{z}) \cdot g(\mathbf{z})$$

where

$$\mathbf{J}_\psi(\mathbf{z}) = \frac{d\psi}{d\mathbf{z}} \Big|_{\mathbf{z}}$$

is the Jacobian of the diffeomorphism $\psi$, and $\mathbf{z} = \psi^{-1}(x)$ is the latent coordinate. The diffeomorphism $\psi$ can be seen as the decoding function, while $\psi^{-1}$ can be seen as the encoding function.

Though the ambient dynamics are determined by both the diffeomorphism $\psi$ and the latent dynamics, the latent dynamics dictate the contractive properties of the dynamical system, which are preserved by the diffeomorphic mapping. Thus, parameterizing latent dynamics conflicts with having full control over contraction rates in one way or another. Therefore, according to various embodiments, the diffeomorphism (rather than the latent dynamics) are learned during training and a family of contractive (latent) dynamics is predetermined from which is selected to before the training.

Regarding this family of contractive (latent) dynamics, first consider linear dynamics in the latent space $\mathcal{Z}$, $\dot{z} = $ **Az,** where

$$\mathbf{z} \in \mathbb{R}^d, \ \mathbf{A} \in \mathbb{R}^{d \times d}, \ d = \dim(\mathcal{Z}).$$

The matrix A can be decomposed as **T$^{-1}$ΛT**, where $\mathbf{T} \in \mathbb{R}^{d \times d}$ is a non-singular matrix, and $\Lambda$ is the Jordan canonical form. This implies that it suffices to parameterize the latent dynamics as Jordan canonical form $\dot{z} = \Lambda z$ since a linear transform **z = Tz'** recovers the dynamics $\dot{z}'$ = **Az'.** In view of this, according to various embodiments, regarding the characterization of contraction behaviours, the following diagonal Jordan form is considered (for the latent dynamics)

$$\boldsymbol{\Lambda} = \mathrm{diag}\{\lambda_i\}_{i=1}^d := \begin{bmatrix} \lambda_1 & 0 & \cdots & 0 \\ 0 & \lambda_2 & \cdots & 0 \\ \vdots & \vdots & \ddots & \vdots \\ 0 & 0 & \cdots & \lambda_d \end{bmatrix}$$

In this case, the latent dynamics $\dot{\boldsymbol{z}} = \Lambda \boldsymbol{z}$ are contractive if and only if $\lambda_i < 0$, $\forall i \in [d] := \{1, 2, \cdots, d\}$ with contraction rate $c = \min\{|\lambda_i|\}_{i=1}^d > 0$. It should be noted the contraction rate c is not sufficient to characterize contraction behaviour because it only provides an upper bound for the distance between two trajectories without specifying how a trajectory converges to another along different axes. Therefore, according to various embodiment, another parameter, the contraction ratio r > 1 is introduced to parameterize the latent dynamics. Specifically, the components of the matrix $\Lambda$ are set as

$$\lambda_1 = -c, \text{ and } \lambda_i = -rc, \forall i \in [d], i \neq 1$$

The resultant latent dynamics are not only contractive with rate c, but also approach the first axis (i.e. the one with index i = 1) while converging. Besides, the larger the contraction ratio r, the stronger its effect. According to various embodiments, this effect is used to control the contraction behaviour of learned dynamics with respect to a training dataset.

Due to the fact that contraction is preserved by diffeomorphisms, complex contractive dynamics can be learned from canonical contractive dynamics, e.g. the latent dynamics as described above.

This fact can be formalized as follows (diffeomorphisms preserve contractivity): given a contractive dynamical system $\dot{\boldsymbol{z}} = g(\boldsymbol{z})$ and a diffeomorphism $\psi$, the dynamical system resulting from the change of coordinates $x = \psi(\boldsymbol{z})$ is also contractive.

As mentioned above, the learning of (ambient) dynamics is done by selecting latent dynamics (e.g. a matrix $\Lambda$ as described above) and training a diffeomorphism which maps the latent dynamics to ambient dynamics which correspond to the demonstrated dynamics.

Various frameworks exist to parameterize diffeomorphisms, including coupling layers, and continuous normalizing flows. According to one embodiment, rational-quadratic layers are used to balance between expressivity and computational efficiency. These are described as an example for the following but the diffeomorphism may also be constructed and parameterized in other forms.

A diffeomorphism, by its definition, is a differentiable bijective map whose inverse is also differentiable. According to various embodiments, the diffeomorphism is constructed as a composition of K diffeomorphisms $\psi = \psi_1 \circ \psi_2 \circ \cdots \circ \psi_K$, with each diffeomorphism $\psi_k$ given by a rational-quadratic coupling layer.

Let $\mathbf{y}_k$ denote the output of the k-th diffeomorphism, with $\mathbf{y}_0 = \boldsymbol{z}$ and $y_K = x$. Each diffeomorphism $\psi_k$ maps its input $\mathbf{y}_{k-1}$ to its output $\mathbf{y}_k$ in the following way:

1. Split $\mathbf{y}_{k-1}$ into two parts $\mathbf{y}_{k-1}^a$ and $\mathbf{y}_{k-1}^b$, that is,

$$\mathbf{y}_{k-1} = [\mathbf{y}_{k-1}^a, \mathbf{y}_{k-1}^b]$$

2. Compute parameters $\boldsymbol{\theta} = \mathrm{NN}(\mathbf{y}_{k-1}^a)$, where NN is a neural network (whose architecture can be flexibly chosen)

3. Compute $\mathbf{y}_k^b = h_{\boldsymbol{\theta}}(\mathbf{y}_{k-1}^b)$, where $h_\theta$ is an invertible analytical function with analytical inverse, parametrized by $\theta$, and e.g. operating in an elementwise manner

4. Set $\mathbf{y}_k^a = \mathbf{y}_{k-1}^a$ and return $\mathbf{y}_k = [\mathbf{y}_k^a, \mathbf{y}_k^b]$.

It should be noted that the diffeomorphisms alternate the selection of $\mathbf{y}_{k-1}^a$ and $\mathbf{y}_{k-1}^b$ for expressivity.

Reference [1] gives details on the invertible parameterized function $h_\theta$ may be constructed.

When training a diffeomorphism to learn first-order dynamical system, a typical loss is the velocity prediction error for trajectory reconstruction. In the present embodiment, the decoder diffeomorphism $\psi$ and the selected latent dynamics $\dot{\mathbf{z}}$ = $\Lambda\mathbf{z}$ predict the velocity at a position $\hat{\mathbf{X}}$ as

$$\hat{\mathbf{v}}(\hat{\mathbf{x}}) = \mathbf{J}_\psi(\mathbf{z}) \cdot \Lambda\mathbf{z}$$

where

$$\mathbf{z} = \psi^{-1}(\mathbf{x}).$$

The velocity prediction error can then be formulated as

$$\ell_{\mathbf{v}} = \frac{1}{N} \sum_{i=1}^{N} \|\hat{\mathbf{v}}(\hat{\mathbf{x}}_i) - \hat{\mathbf{v}}_i\|_2^2.$$

So, according to various embodiments, the diffeomorphism is trained to minimize a loss including this error (e.g. the velocity prediction error it is calculated per batch and diffeomorphism parameters are adapted to reduce the loss, e.g. using backpropagation).

Besides the velocity prediction error, the loss may include other loss terms. Specifically, besides trajectory reconstruction, another important aspect of the learned dynamics is fast recovery from disturbances. To achieve this, on the one hand, the learned dynamical system is made contractive by design via using canonical latent dynamics as described above. On the other hand, by leveraging the observation that the latent dynamics approaches the first axis while converging, it is helpful to add another loss term encouraging the decoder image of the first axis, which is referred to as ambient eigen-axis here, to align with the trajectories. The underlying intuition is that through the diffeomorphism, the ambient dynamics approach the ambient eigen-axis while converging, and thus aligning it with the trajectories can enable the dynamical system to rapidly recover from disturbances. Following this reasoning, a loss term for ambient eigen-axis alignment may be included in the loss given as follows,

$$\ell_{\text{align}} = \frac{1}{N} \sum_{i=1}^{N} \|\psi(\text{proj}_1(\hat{\mathbf{z}}_i)) - \hat{\mathbf{x}}_i\|_2^2$$

where $\hat{\mathbf{z}}_i = \psi^{-1}(\hat{\mathbf{x}}_i)$, $\text{proj}_1$ projects $\hat{\mathbf{z}}_i$ onto the first axis in the latent space. The point $\psi(\text{proj}_1(\hat{\mathbf{z}}_i))$ lies on the ambient eigen-axis and penalizing its difference with $\hat{\mathbf{x}}_i$ encourages the ambient eigen-axis to align with the trajectories. The loss for training the diffeomorphism (i.e. contractive flow (CF) in the present embodiment) is then for example a weighted sum of the aforementioned loss terms:

$$\ell_{CF} = \ell_{\mathbf{v}} + \mu \cdot \ell_{\text{align}}$$

Diffeomorphisms cannot map from a latent space to an ambient space which has a different dimension. This significantly restricts their applications, because numerous real dynamical systems evolve on a low-dimensional manifold embedded in a high-dimensional space. Injective flows overcome this drawback of standard normalizing flows. According to various embodiments, an injective flow, in particular an injective contractive flow (ICF) is used to learn high-dimensional dynamics while imposing a contractive behaviour via a latent low-dimensional canonical contractive system (i.e. to address the case of the ambient space having a higher dimension as the latent space).

In the Euclidean case where the latent space is $\mathcal{Z} = \mathbb{R}^d$ and the ambient space is $\mathcal{X} = \mathbb{R}^D$ (wherein d<D) a possible scheme to account for the dimension mismatch is through the zero-padding operation followed by a diffeomorphism. Formally, the decoder (i.e. decoding function, i.e. inverse of the encoding function) $\varphi : \mathbb{R}^d \to \mathbb{R}^D$ is written as $\varphi = \psi \circ \mathrm{Pad}$ where $\mathrm{Pad}(\mathbf{z}) := [z_1, \cdots, z_d, 0, \cdots, 0]^\mathsf{T}$ represents a $D$-dimensional vector z with additional D - d zeros, with D = dim($\mathcal{X}$) and $\psi : \mathcal{X} \to \mathcal{X}$ being a diffeomorphism in the ambient space, which can be parameterized as described above. It can be seen that φ is an injective map. Further, it is bijective between the latent space $\mathcal{Z}$ and its image $\varphi(\mathcal{Z})$, i.e. the decoder manifold. Therefore, φ preserves contractivity on the decoder manifold. Moreover, a left inverse of φ can be defined on φ(Z):

$$\varphi^* = \mathrm{Unpad} \circ \Psi^{-1}$$

where Unpad: $\mathbb{R}^D \to \mathbb{R}^d$ removes the last $D$ - $d$ dimensions of its input.

In the case of having a decoding function φ and an encoding function $\varphi^*$ as described above (and thus in particular having an injective mapping from $\mathcal{Z}$ to $\mathcal{X}$), to match the image $\varphi(\mathcal{Z})$ with the demonstrated data spread in $\mathcal{X}$, a manifold matching loss term may be introduced into the loss, e.g. given by

$$\ell_\mathbf{x} = \frac{1}{N} \sum_{i=1}^N \left\| \varphi\left(\varphi^*\left(\hat{\mathbf{x}}_i\right)\right) - \hat{\mathbf{x}}_i \right\|_2^2$$

where $\varphi^*$ encodes $\hat{\mathbf{x}}_i$ into $\mathcal{Z}$ and consequently φ decodes $\varphi^*(\hat{\mathbf{x}}_i)$ onto the decoder manifold. This means that this loss component penalizes discrepancies between the decoder manifold and the data (i.e. the demonstrated states).

To consider this loss component as well as the requirements for accurate velocity prediction and strong contraction behaviour a total loss for training the diffeomorphism, i.e. the ICF in the present embodiment, may be uses which is given by the weighted sum of the three loss terms $\ell_\mathrm{v}$, $\ell_\mathrm{align}$, and $\ell_\mathrm{x}$ as follows

$$\ell_{ICF} = \ell_\mathbf{v} + \mu \cdot \ell_\mathrm{align} + \nu \cdot \ell_\mathbf{x}$$

ICF as described above is based on Euclidean spaces. However, for example, the special orthogonal group

$$\mathcal{SO}(3) = \{\mathbf{R} \in \mathbb{R}^{3\times 3} \mid \mathbf{R}^\mathsf{T}\mathbf{R} = \mathbb{I}, \det(\mathbf{R}) = 1\}$$

which plays a fundamental role in characterizing rotation in robot motion, is non-Euclidean. To overcome this issue, according to various embodiments, the Lie algebra $\mathfrak{so}(3)$ associated with the Lie group $\mathcal{SO}(3)$ is employed. The Lie algebra represents the Euclidean tangent space at the origin of the Lie group. The Lie algebra $\mathfrak{so}(3)$ is the set of all $3 \times 3$ skew-symmetric matrices $[\mathbf{r}]_\times$ which can be parameterized by a 3-dimensional vector $\mathbf{r} \in \mathbb{R}^3$.

The logarithmic map Log : $\mathcal{SO}(3) \to \mathfrak{so}(3)$ and the exponential map Exp : $\mathfrak{so}(3) \to \mathcal{SO}(3)$ allow mapping between $\mathcal{SO}(3)$ and $\mathfrak{so}(3)$. To preserve contraction properties from $\mathfrak{so}(3)$ to $\mathcal{SO}(3)$ and hence from $\mathbb{R}^3$ to $\mathcal{SO}(3)$ - since $\mathfrak{so}(3)$ is diffeomorphic to $\mathbb{R}^3$ - Exp needs to be injective. By restricting $\mathfrak{so}(3)$ to its first cover $\{[\mathbf{r}]_\times \in \mathfrak{so}(3) \mid \|\mathbf{r}\|_2 < \pi\}$ this can be achieved, such that Exp is diffeomorphic.

Further, a diffeomorphic map between $\mathbb{R}^3$ and the $\pi$-ball $\mathcal{B}_\pi := \left\{ \mathbf{r} \in \mathbb{R}^3 \mid \|\mathbf{r}\|_2 < \pi \right\}$ can be designed using the function $\eta := \pi \cdot b \circ \tanh$ with

$$b(\mathbf{x}) = \begin{cases} \dfrac{\|\mathbf{x}\|_\infty}{\|\mathbf{x}\|_2}\mathbf{x} & \mathbf{x} \neq \mathbf{0} \\ \mathbf{0} & \mathbf{x} = \mathbf{0} \end{cases}$$

Putting the above mappings together gives an injective decoder $\mathrm{Exp}_\times \circ \eta \circ \varphi : \mathcal{Z} \to \mathcal{SO}(3)$ where $\mathrm{Exp}_\times : B_\pi \to \mathcal{SO}(3)$ denotes $\mathrm{Exp}([\cdot]_\times)$ preserving the contractivity for $\mathcal{SO}(3)$.

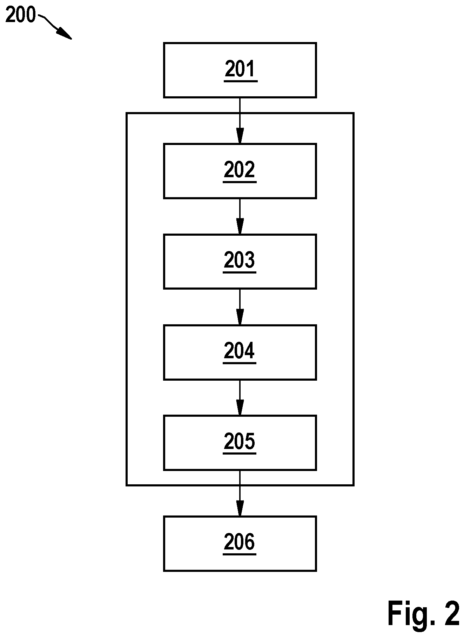

In summary, according to various embodiments, a method is provided as illustrated in figure 2.

Figure 2 shows a flow diagram 200 illustrating a method learning robot device dynamics according to an embodiment.

In 201, demonstrations for movements of a robot device are provided (in particular captured), wherein each demonstration demonstrates dynamics of the robot device by indicating a sequence of demonstrated states (positions and/or orientations, i.e. e.g. poses) of the robot device in an ambient space.

Then, for each demonstration, the following is carried out

   • encoding, in 202, the demonstrated states of the sequence of demonstrated states of the demonstration to encoded demonstrated states in a latent space by an encoding function which maps states from the ambient space to the latent space
   • determining, in 203, latent space velocities at the encoded demonstrated states according to predetermined dynamics in the latent space
   • determining, in 204, predicted velocities at the demonstrated states in ambient space from the determined latent space velocities at the encoded demonstrated states according to the Jacobian of an inverse of the encoding function (i.e. according to the Jacobian of the (injective) decoding function; this is typically done by multiplying the latent space velocity vectors by the Jacobian); and
   • determining, in 205, a loss for the demonstration including a prediction loss determined from a difference of the predicted velocities at the demonstrated states and the demonstrated velocities (which are for example given by the difference of subsequent demonstrated states, divided by the sampling time interval).

Finally, in 206, the encoding function is trained to reduce a total loss including the losses determined for at least some of the demonstrations. This process is for example carried out iteratively for a sequence of batches of demonstrations (e.g. until all demonstrations were used, i.e. were considered in one of the iterations).

The approach of figure 2 can be used to learn a control policy (from demonstrations) and then compute a control signal for controlling a robot device by a robot device controller, like e.g. a computer-controlled machine, like a robot, a vehicle, a domestic appliance, a power tool, a manufacturing machine, a personal assistant or an access control system. According to various embodiments, a policy for controlling the technical system may be learnt and then the technical system may be operated accordingly.

Various embodiments of the robot device controller may receive and use image data (i.e. digital images) from various visual sensors (cameras) such as video, radar, LiDAR, ultrasonic, thermal imaging, motion, sonar etc.

The method of Figure 2 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

**Claims**

1. A method for learning robot device dynamics, comprising:

   providing (201) demonstrations for movements of a robot device (101),
   wherein each demonstration demonstrates dynamics of the robot device (101) by indicating a sequence of demonstrated states of the robot device (101) in an ambient space;
   for each demonstration,

   encoding (202) the demonstrated states of the sequence of demonstrated states of the demonstration to encoded demonstrated states in a latent space by an encoding function which maps states from the ambient space to the latent space; determining (203) latent space velocities at the encoded demonstrated states according to predetermined dynamics in the latent space;
   determining (204) predicted velocities at the demonstrated states in ambient space from the determined latent space velocities at the encoded demonstrated states according to the Jacobian of an inverse of the encoding function; and
   determining (205) a loss for the demonstration including a prediction loss determined from a difference of the predicted velocities at the demonstrated states and the demonstrated velocities; and training (206) the encoding function to reduce a total loss including the losses determined for at least some of the demonstrations.

2. The method of claim 1, wherein the predetermined dynamics in the latent space are contractive.

3. The method of claim 2, wherein the predetermined dynamics in the latent space are given by a matrix with predetermined eigenvalues.

4. The method of claim 3, comprising determining the eigenvalues according to a predetermined contraction rate and/or a predetermined contraction ratio.

5. The method of claim 3 or 4, wherein the total loss further includes an alignment loss term which rewards that the demonstrated trajectories (after being encoded to trajectories of encoded states, i.e. encoded trajectories) match the direction of the eigenvector of the largest eigenvalue of the predetermined dynamics in latent space (i.e. the loss encourages the ambient eigen-axis (i.e. the decoder image of the latent space axis given by the direction of the eigenvector of the largest eigenvalue) to align with the demonstrated trajectories).

6. The method of any one of claims 1 to 5, wherein the total loss further comprises a manifold matching loss term which rewards that the set of points which the inverse of the encoding function generates from the encoded demonstrated states matches the set of demonstrated states in ambient space.

7. The method of any one of claims 1 to 6, comprising constructing the encoding function from a sequence of diffeomorphisms wherein training the encoding function comprises adjusting parameters of the diffeomorphisms.

8. A method for controlling a robot device (101), comprising learning robot device dynamics according to any one of claims 1 to 7 and following the determined robot device dynamics for controlling the robot device (101).

9. A robot device controller (106), configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.

**Amended claims in accordance with Rule 137(2) EPC.**

1. A method for learning robot device dynamics, comprising:

   providing (201) demonstrations for movements of a robot device (101), wherein each demonstration demonstrates dynamics of the robot device (101) by indicating a sequence of demonstrated states of the robot device (101) in an ambient space;

for each demonstration,

encoding (202) the demonstrated states of the sequence of demonstrated states of the demonstration to encoded demonstrated states in a latent space by an encoding function which maps states from the ambient space to the latent space, wherein the encoding function is formed by a sequence of concatenated diffeomorphisms;

determining (203) latent space velocities at the encoded demonstrated states according to predetermined dynamics in the latent space;

determining (204) predicted velocities at the demonstrated states in ambient space from the determined latent space velocities at the encoded demonstrated states according to the Jacobian of an inverse of the encoding function; and

determining (205) a loss for the demonstration including a prediction loss determined from a difference of the predicted velocities at the demonstrated states and the demonstrated velocities; and

training (206) the encoding function to reduce a total loss including the losses determined for at least some of the demonstrations.

2. The method of claim 1, wherein the predetermined dynamics in the latent space are contractive.

3. The method of claim 2, wherein the predetermined dynamics in the latent space are given by a matrix with predetermined eigenvalues.

4. The method of claim 3, comprising determining the eigenvalues according to a predetermined contraction rate and/or a predetermined contraction ratio.

5. The method of claim 3 or 4, wherein the total loss further includes an alignment loss term which rewards that the demonstrated trajectories match the direction of the eigenvector of the largest eigenvalue of the predetermined dynamics in latent space wherein the alignment loss term includes averaged squared differences between states of the demonstrated dynamics and points on the ambient eigen-axis of the largest eigenvalue of the predetermined dynamics.

6. The method of any one of claims 1 to 5, wherein the total loss further comprises a manifold matching loss term which rewards that the set of points which the inverse of the encoding function generates from the encoded demonstrated states matches the set of demonstrated states in ambient space.

7. The method of any one of claims 1 to 6, wherein training the encoding function comprises adjusting parameters of the diffeomorphisms.

8. A method for controlling a robot device (101), comprising learning robot device dynamics according to any one of claims 1 to 7 and following the determined robot device dynamics for controlling the robot device (101).

9. A robot device controller (106), configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.

Fig. 1

200

201

202

203

204

205

206

Fig. 2

**EP 4 737 069 A1**

Europäisches Patentamt
European Patent Office
Office européen des brevets

# EUROPEAN SEARCH REPORT

**Application Number**

EP 24 21 0617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/040861 A1 (EL KHADIR BACHIR [US] ET AL) 10 February 2022 (2022-02-10) | 1-4,7-11 | INV. B25J9/16 G05B19/423 |
| Y | * figures 1-8c * <br> * claim 1 * <br> * paragraph [0041] - paragraph [0079] * <br> ----- | 5,6 | |
| Y | BEIK-MOHAMMADI HADI ET AL: "Reactive motion generation on learned Riemannian manifolds", THE INTERNATIONAL JOURNAL OF ROBOTICS RESEARCH, vol. 42, no. 10, 28 August 2023 (2023-08-28), pages 729-754, XP093256501, Sage ISSN: 0278-3649, DOI: 10.1177/02783649231193046 * the whole document * <br> ----- | 5,6 | |
| Y | HOLGER KLEIN ET AL: "On the Design of Region-Avoiding Metrics for Collision-Safe Motion Generation on Riemannian Manifolds", ARXIV.ORG, CORNELL UNIVERSITY LIBRARY, 201 OLIN LIBRARY CORNELL UNIVERSITY ITHACA, NY 14853, 28 July 2023 (2023-07-28), XP091576586, * the whole document * <br> ----- | 5,6 | |

**TECHNICAL FIELDS SEARCHED (IPC)**

B25J
G05B

The present search report has been drawn up for all claims

| Place of search | Date of completion of the search | Examiner |
|---|---|---|
| The Hague | 17 April 2025 | Lorenzo Barreiro, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 21 0617

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| US 2022040861 A1 | 10-02-2022 | EP 3898132 A1<br>US 2022040861 A1<br>WO 2020160431 A1 | 27-10-2021<br>10-02-2022<br>06-08-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. DURKAN et al.** Neural spline flows. *Advances in neural information processing systems*, 2019, vol. 32